# FASCICULE DE BREVET EUROPEEN

(11) **EP 2 665 015 B1**
(45) Date de publication et mention de la délivrance du brevet: **09.09.2020**
(21) Numéro de dépôt: 13168350.0
(22) Date de dépôt: 17.05.2013
(51) Int. Cl.: G06K 7/10, G06K 7/00, G01S 13/75, G06K 17/00

(54) **Adaptation d'une transmission entre un terminal et un transpondeur électromagnétique**
Anpassung einer Übertragung zwischen einem Endgerät und einem elektromagnetischen Transponder
Adaptation of a transmission between a terminal and an electromagnetic transponder

(30) Priorité: 18.05.2012 FR 1254568
(43) Date de publication de la demande: 20.11.2013
(73) Titulaire: Proton World International N.V., 1831 Diegem (BE)
(72) Inventeur: Restiau, Guy, 1367 Ramillies (BE)
(74) Mandataire: Cabinet Beaumont

(56) Documents cités:
- EP-A2- 1 840 790
- DE-A1-102009 045 186

## Description

### Domaine de l'invention

La présente invention concerne, de façon générale, les systèmes de communication en champ proche et, plus particulièrement, l'évaluation de la consommation attendue d'un transpondeur électromagnétique à portée d'un terminal de génération d'un champ.

### Exposé de l'art antérieur

De plus en plus de dispositifs portables (téléphones intelligents ou Smartphones, tablettes tactiles, etc.) sont équipés de dispositifs de communication en champ proche (NFC - Near Field Communication).

Le plus souvent, ces dispositifs portables sont capables de fonctionner dans deux modes dits respectivement mode carte et mode lecteur. En mode carte, le dispositif fonctionne à la manière d'une carte à puce sans contact pour communiquer avec un terminal de communication en champ proche (par exemple un autre dispositif mobile fonctionnant en mode lecteur). En mode lecteur, le dispositif fonctionne à la manière d'un terminal et est susceptible de lire des cartes sans contact (ou un autre dispositif fonctionnant en mode carte) à la manière d'un lecteur de transpondeur électromagnétique.

Les systèmes à transpondeurs électromagnétiques utilisés dans les communications en champ proche sont désormais bien connus. Leur fonctionnement est basé sur l'émission d'un rayonnement radiofréquence par le terminal ou lecteur pour communiquer avec, et le cas échéant téléalimenter, un transpondeur présent dans le champ du terminal. Le transpondeur, lorsqu'il est à portée du terminal, capte ce champ et communique en modulant la charge qu'il constitue sur ce champ. Un transpondeur est à portée quand il est en mesure d'exploiter le champ, notamment d'extraire de ce champ une énergie suffisante au fonctionnement des circuits qu'il comporte.

Le terminal et le transpondeur sont généralement accordés sur une même fréquence.

Lorsque le dispositif fonctionne en mode lecteur, il doit, le plus souvent, téléalimenter le transpondeur qui se trouve à sa portée et avec lequel il souhaite communiquer. Or, différentes natures de transpondeurs existent, de la simple étiquette électronique passive à des transpondeurs plus évolués équipés de microprocesseurs. De plus, selon la fonction exécutée par un transpondeur, sa consommation diffère.

Pour des questions d'économie (que le dispositif fonctionnant en mode lecteur soit alimenté par batterie ou directement par le réseau de distribution d'électricité), on cherche à optimiser la consommation d'énergie des lecteurs.

Il serait donc souhaitable de pouvoir adapter l'énergie du champ électromagnétique généré par le terminal en fonction de la consommation attendue du transpondeur qui est en face.

On connaît aujourd'hui des systèmes complexes qui évaluent le couplage entre les circuits oscillants du lecteur et de la carte pour ajuster la puissance d'un amplificateur d'émission côté lecteur. Toutefois, la mise en oeuvre de ces techniques requiert de multiples mesures et calculs et, le plus souvent, une communication entre les deux dispositifs.

Le document EP-A-1840790 décrit un procédé de détermination du type d'un transpondeur présent dans le champ d'un terminal et compare un amortissement de la réponse d'un signal reçu par une antenne par rapport à un seuil.

### Résumé

Un mode de réalisation de la présente invention vise à proposer une technique simplifiée pour évaluer la consommation attendue d'un transpondeur se trouvant dans le champ d'un terminal.

Un mode de réalisation de la présente invention vise à proposer une solution ne nécessitant aucune communication du transpondeur vers le lecteur.

Pour atteindre tout ou partie de ces objets ainsi que d'autres, on prévoit un procédé de détermination d'un type de transpondeur auquel appartient un transpondeur électromagnétique dans le champ d'un terminal, dans lequel le type est déterminé à partir d'une différence entre une valeur mesurée d'une information représentative du courant dans un circuit oscillant du terminal et une valeur à vide de cette information.

Selon un mode de réalisation de la présente invention, ladite information est proportionnelle à la tension aux bornes d'un élément capacitif du circuit oscillant du terminal.

Selon un mode de réalisation de la présente invention, ladite valeur à vide est mémorisée à un moment où aucun transpondeur n'est présent dans le champ.

Selon un mode de réalisation de la présente invention, ladite information est mesurée pendant des trames émises périodiquement par le terminal en attente d'une communication.

On prévoit également un procédé d'adaptation d'une transmission entre un terminal de génération d'un champ électromagnétique et un transpondeur se trouvant dans ce champ, dans lequel ladite adaptation tient compte d'un type de transpondeur déterminé selon le procédé ci-dessus.

Selon un mode de réalisation de la présente invention, le taux de modulation d'une porteuse de transmission est adapté en fonction du type de transpondeur détecté.

Selon un mode de réalisation de la présente invention, le gain d'un amplificateur d'émission est adapté en fonction du type de transpondeur détecté.

On prévoit également un terminal de lecture et/ou d'écriture en champ proche, adapté à la mise en oeuvre du procédé ci-dessus.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est une représentation schématique d'un lecteur et d'un transpondeur ;
les figures 2A, 2B et 2C sont des chronogrammes illustrant le fonctionnement du système de la figure 1 dans une phase d'approche d'un transpondeur dans le champ du lecteur ;
la figure 3 est un schéma bloc d'un mode de réalisation d'un procédé d'adaptation de l'énergie consommée par un terminal ; et
la figure 4 illustre un exemple de table de détermination de type de transpondeur dans le champ d'un lecteur.

### Description détaillée

De mêmes éléments ont été désignés par de mêmes références aux différentes figures. Par souci de clarté, seuls les étapes et éléments utiles à la compréhension des modes de réalisation ont été représentés et seront décrits. En particulier, les circuits de traitement des communications et, en particulier, de traitement des données échangées entre un transpondeur et un terminal n'ont pas été détaillés, les modes de réalisation qui vont être décrits étant compatibles avec les circuits de traitement usuels.

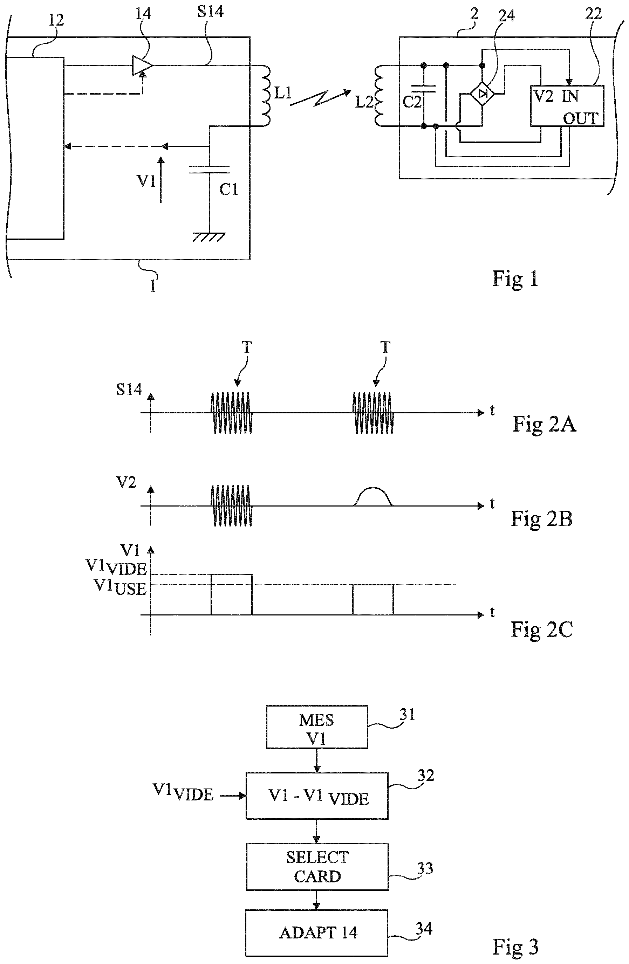

La figure 1 est une représentation schématique d'un système de communication sans contact. Cette figure représente, d'une part, un terminal 1, généralement appelé lecteur, de génération d'un champ électromagnétique à destination de transpondeurs susceptibles d'être présents dans ce champ et, d'autre part, un transpondeur 2, généralement appelé carte et susceptible de capter ce champ afin d'établir une communication avec le lecteur.

Dans un exemple d'application à des dispositifs portables de télécommunication de type Smartphone, le lecteur 1 peut être constitué par un téléphone mobile intelligent équipé d'un routeur NFC et le transpondeur peut être constitué d'une carte à puce sans contact. Si le téléphone fonctionne en mode carte, il constitue le transpondeur 2 et le terminal ou lecteur est constitué généralement d'un dispositif fixe de type borne, par exemple de validation de ticket de transport.

Le lecteur 1 comporte divers circuits électroniques (identifiés par un bloc 12 en figure 1) de traitement des données à transmettre et reçues, et de génération d'un signal radiofréquence (par exemple à la fréquence de 13,56 MHz) destiné à être amplifié par un amplificateur 14 avant d'attaquer un circuit oscillant (antenne ou élément inductif L1 et élément capacitif C1). Dans l'exemple de la figure 1, on suppose un circuit oscillant série, l'élément inductif L1 et l'élément capacitif C1 étant connectés en série entre la sortie de l'amplificateur 14 et la masse. La représentation de la figure 1 est simplifiée côté lecteur et d'autres circuits peuvent être présents.

Le circuit oscillant du lecteur 1 génère un champ électromagnétique haute fréquence susceptible d'être capté par des transpondeurs 2 présents dans ce champ.

Un transpondeur 2 comporte généralement un circuit résonnant, formé d'une antenne ou inductance L2 et d'un élément capacitif C2, le plus souvent en parallèle. La tension aux bornes de ce circuit oscillant est redressée (pont redresseur 24) pour générer une tension continue V2 d'alimentation de divers circuits (symbolisés par un bloc 22) du transpondeur. Outre cette tension d'alimentation, le signal radiofréquence, ou une image de celui-ci, est prélevé à destination des circuits 22 (entrée IN) pour démoduler les messages reçus du terminal et les interpréter. La transmission, dans le sens transpondeur vers lecteur, s'effectue en modulant la charge constituée par les circuits du transpondeur sur le champ électromagnétique généré par le lecteur. On parle généralement d'une rétromodulation (le plus souvent résistive ou capacitive). Cette rétromodulation est symbolisée en figure 1 par une sortie OUT du circuit 22 reliée aux bornes du circuit oscillant.

Le fonctionnement d'un système à transpondeur électromagnétique est connu et ne sera pas détaillé plus avant.

Généralement, tant qu'aucun transpondeur n'a été détecté dans le champ du lecteur, ce dernier émet périodiquement une trame d'interrogation. En effet, il n'est pas souhaitable que le lecteur émette en permanence pour des raisons évidentes de consommation.

Les figures 2A, 2B et 2C sont des chronogrammes illustrant le fonctionnement du système pendant de telles trames T d'interrogation. Ces trames T consistent, pour le lecteur, à émettre périodiquement un train d'alternances de la porteuse radiofréquence (par exemple à 13,56 MHz) sans modulation (signal S14 en sortie de l'amplificateur 14, figure 2A). La durée de la trame est relativement courte (typiquement, de l'ordre de 1 à 2 microsecondes).

Si aucun transpondeur n'est présent dans le champ (partie gauche des chronogrammes des figures 2A à 2C), le champ électromagnétique n'est pas perturbé et la tension V1 aux bornes du condensateur C1, ou une image du courant dans le circuit oscillant du lecteur, prend une valeur V1_{VIDE}, dite à vide, pendant la trame T. Par valeur à vide, on entend une valeur correspondant à un moment où aucun transpondeur n'est présent dans le champ.

Lorsqu'un transpondeur se trouve dans le champ électromagnétique, une tension se développe aux bornes de son circuit oscillant et une tension V2 d'alimentation des circuits 22 est générée comme l'illustre la partie droite de la figure 2B.

Côté lecteur, le prélèvement d'énergie par le transpondeur se traduit par un affaiblissement du courant dans le circuit oscillant, donc de la tension V1 jusqu'à une valeur d'utilisation V1_{USE}.

Cette variation est détectée par le lecteur qui peut alors entamer une communication avec le transpondeur.

On prévoit d'exploiter la variation de la tension V1 pendant ces phases de détection pour optimiser la configuration du lecteur afin de réduire sa consommation lorsque cela est possible et/ou d'améliorer la qualité de la transmission.

La figure 3 illustre, sous forme de blocs, un mode de mise en oeuvre du procédé d'adaptation du lecteur au type de transpondeur présent dans son champ.

Une première étape (bloc 31, MES V1) consiste à mesurer une information représentative du courant dans le circuit oscillant du transpondeur. Par exemple, on mesure la tension V1 aux bornes de l'élément capacitif C1. En variante, on pourra prévoir, en série avec le circuit oscillant, un détecteur de courant.

Cette mesure est comparée à la valeur à vide (bloc 32, V1-V1_{VIDE}), par exemple en calculant la différence entre les deux valeurs. La valeur à vide est mesurée pendant l'émission d'une trame T, en l'absence de transpondeur, puis mémorisée.

Tant que la valeur V1 ne change pas, c'est qu'aucun transpondeur n'est présent dans le champ (ou qu'une perturbation du champ d'une autre nature se produit). Dès que la valeur bouge, on exploite la différence par rapport à la valeur à vide pour déterminer le type de carte 2 présent dans le champ du lecteur (bloc 33, SELECT CARD).

A titre d'exemple de réalisation, on exploite une table de correspondance entre la différence δv de tension et le type de transpondeur présent dans le champ. En effet, l'inventeur s'est aperçu qu'en fonction du type de transpondeur, plus ou moins d'énergie est tirée sur le champ du lecteur. De plus, cette variation dépend d'une part du fait que le transpondeur est un transpondeur passif ou actif mais également de façon plus précise, du fabricant du transpondeur ou de ses caractéristiques (carte à puce sans contact, routeur NFC d'un téléphone portable, etc...).

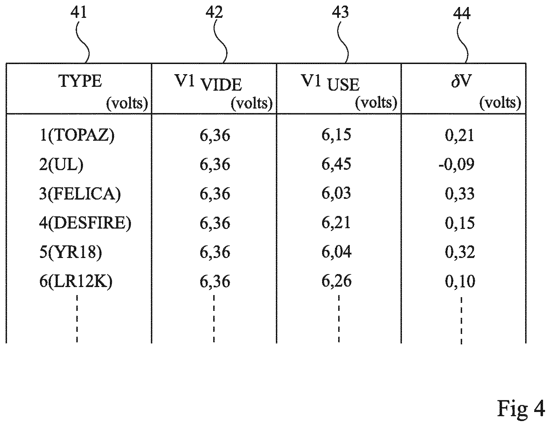

La figure 4 illustre un exemple de table de correspondance entre différents types de transpondeurs et leur influence sur la différence de tension. Cette figure illustre dans une première colonne 41 le type (TYPE) de transpondeur, dans une seconde colonne 42, la valeur à vide (V1_{VIDE}) de la tension V1, dans une troisième colonne 43 la valeur (V1_{USE}) de tension V1 en présence du transpondeur du type correspondant et dans la colonne 44, la différence (δv) de tension.

Dans l'exemple de la figure 4, on a identifié de façon arbitraire six types ou familles de transpondeur en indiquant entre parenthèse leurs dénominations commerciales (TOPAZ, UL, FELICA, DESFIRE, YR18, LR12K) respective.

La valeur à vide est bien entendu la même quel que soit le type de transpondeur concerné dans la mesure où il s'agit d'une mesure faite sans transpondeur.

Selon le type de transpondeur, la différence peut être négative en fonction de l'induction mutuelle (par exemple dans le cas où l'inductance du terminal est plus faible que celle du transpondeur).

En pratique, la connaissance (donc le stockage) des colonnes 41 et 44 et de la valeur à vide peut suffire.

On aurait pu penser comparer directement la valeur mesurée V1 à un seuil ou à des fourchettes de valeurs pour déterminer la famille à laquelle appartient le transpondeur. Toutefois, une telle détermination serait fortement sensible à des variations de la tension V1 dues à d'autres facteurs environnementaux. L'utilisation de la différence δv permet de réduire l'influence d'une telle variation.

Pour affiner encore la détection, on pourra option-nellement modifier la valeur à vide mémorisée en se basant sur des valeurs courantes pendant lesquelles on peut considérer qu'il n'y a pas de transpondeur. Par exemple, une variation stable peut être identifiée par l'absence d'établissement de communication.

La tension V1 en présence de transpondeur varie également en fonction de la distance qui sépare le lecteur du transpondeur. Toutefois, au moment où un transpondeur s'approche du lecteur, il est détecté dès qu'il entre dans le champ (distance maximale). Par conséquent, cette table de correspondance peut être établie avec des valeurs attendues à distance maximale entre le terminal et le transpondeur lorsque celui-ci commence à être alimenté, donc à prélever une énergie sur le champ.

Une variation transitoire de l'environnement peut provoquer une variation laissant croire à la présence d'un transpondeur. Une telle fausse détection se produit déjà aujourd'hui et n'est pas gênante car le terminal s'aperçoit rapidement qu'il n'y a pas de communication.

Une fois que le type de transpondeur est identifié, on connaît la tension de fonctionnement qui lui est nécessaire. On peut alors adapter (bloc 34, ADAPT 14) l'émission en conséquence. Cette adaptation peut prendre différentes formes. On peut modifier l'amplification opérée par l'amplificateur 14. Selon un autre mode de réalisation, on joue sur la profondeur de modulation du signal transmis par le lecteur pour faciliter son décodage par la carte. En effet, la modulation dans le sens lecteur vers carte est généralement une modulation d'amplitude avec un taux de modulation partiel qu'il est donc possible d'adapter.

Un avantage de la détermination de type de transpondeur décrite ci-dessus est qu'elle est particulièrement simple à effectuer, l'information de la tension V1 étant déjà mesurée dans les terminaux existants. La mise en oeuvre du procédé décrit ne requiert donc aucune modification structurelle dans les terminaux et peut être mise en oeuvre dans des terminaux existants en adaptant les programmes mis en oeuvre par ces terminaux.

Un autre avantage est qu'aucune communication entre terminal et transpondeur n'est nécessaire, la détermination, et l'adaptation éventuelle, s'effectuant uniquement côté terminal.

Divers modes de réalisation ont été décrits, diverses variantes et modifications apparaîtront à l'homme de l'art. En particulier, la mise en oeuvre pratique de la détection et de l'adaptation est à portée de l'homme du métier à partir de la description fonctionnelle donnée ci-dessus et en utilisant les circuits habituellement présents dans les lecteurs. Parmi les variantes envisageables, on pourra calculer la différence V1_{VIDE} - V1_{USE}, mesurer une autre information que la tension, etc.

## Revendications

1. Procédé de détermination d'un type de transpondeur auquel appartient un transpondeur électromagnétique dans le champ d'un terminal (1), **caractérisé en ce que** le type est déterminé à partir d'une différence (δv) entre une valeur mesurée d'une information (V1) représentative du courant dans un circuit oscillant du terminal et une valeur à vide (V1_{VIDE}) de cette information.

2. Procédé selon la revendication 1, dans lequel ladite information est proportionnelle à la tension (V1) aux bornes d'un élément capacitif (C1) du circuit oscillant du terminal (1).

3. Procédé selon la revendication 1 ou 2, dans lequel ladite valeur à vide (V1_{VIDE}) est mémorisée à un moment où aucun transpondeur (2) n'est présent dans le champ.

4. Procédé selon l'une quelconque des revendications 1 à 3, dans lequel ladite information (V1) est mesurée pendant des trames (T) émises périodiquement par le terminal en attente d'une communication.

5. Procédé d'adaptation d'une transmission entre un terminal (1) de génération d'un champ électromagnétique et un transpondeur (2) se trouvant dans ce champ, dans lequel ladite adaptation tient compte d'un type (TYPE) de transpondeur déterminé selon le procédé selon l'une quelconque des revendications 1 à 4.

6. Procédé selon la revendication 5, dans lequel le taux de modulation d'une porteuse de transmission est adapté en fonction du type de transpondeur détecté.

7. Procédé selon la revendication 5, dans lequel le gain d'un amplificateur (14) d'émission est adapté en fonction du type de transpondeur détecté.

8. Terminal (1) de lecture et/ou d'écriture en champ proche, adapté à la mise en oeuvre du procédé selon l'une quelconque des revendications précédentes.

## Patentansprüche

1. Verfahren zum Bestimmen eines Transpondertyps eines elektromagnetischen Transponders im Feld eines Terminals (1), **dadurch gekennzeichnet, dass** der Typ auf der Grundlage einer Differenz (δv) zwischen einem gemessenen Wert einer Information (V1), die den Strom in einem Schwingkreis des Terminals darstellt, und einem Leerlaufwert (V1_{NO-LOAD}) dieser Information bestimmt wird.

2. Verfahren nach Anspruch 1, wobei die Information proportional zu der Spannung (V1) an einem kapazitiven Element (C1) des Schwingkreises des Terminals (1) ist.

3. Verfahren nach Anspruch 1 oder 2, wobei der Leerlaufwert (V1_{NO-LOAD}) zu einem Zeitpunkt gespeichert wird, zu dem kein Transponder (2) im Feld vorhanden ist.

4. Verfahren nach einem der Ansprüche 1 bis 3, wobei die Information (V1) während Rahmen (T) gemessen wird, die periodisch von dem inaktiven Terminal gesendet werden.

5. Verfahren zur Anpassung einer Übertragung zwischen einem Terminal (1) zur Erzeugung eines elektromagnetischen Feldes und einem in diesem Feld vorhandenen Transponder (2), wobei die Anpassung ein Transpondertyp (TYPE) berücksichtigt, der nach dem Verfahren nach einem der Ansprüche 1 bis 4 bestimmt wird.

6. Verfahren nach Anspruch 5, wobei die Modulationsrate eines Übertragungs-Carriers entsprechend dem ermittelten Transpondertyp angepasst wird.

7. Verfahren nach Anspruch 5, wobei die Verstärkung eines Sendeverstärkers (14) entsprechend dem detektierten Transpondertyp angepasst wird.

8. Ein Nahfeld-Lese- und/oder Schreib-Terminal (1), das in der Lage ist, das Verfahren nach einem der vorstehenden Ansprüche zu implementieren.

## Claims

1. A method for determining a transponder type to which an electromagnetic transponder in the field of a terminal (1) belongs, **characterized in that** the type is determined based on a difference (δv) between a measured value of a piece of information (V1) representative of the current in an oscillating circuit of the terminal and a no-load value (V1_{NO-LOAD}) of this piece of information.

2. The method of claim 1, wherein said piece of information is proportional to the voltage (V1) across a capacitive element (C1) of the oscillating circuit of the terminal (1).

3. The method of claim 1 or 2, wherein said no-load value (V1_{NO-LOAD}) is stored at a time when no transponder (2) is present in the field.

4. The method of any of claims 1 to 3, wherein said piece of information (V1) is measured during frames (T) periodically transmitted by the idle terminal.

5. A method for adapting a transmission between a terminal (1) for generating an electromagnetic field and a transponder (2) present in this field wherein said adaptation takes into account a transponder type (TYPE) determined according to the method of any of claims 1 to 4.

6. The method of claim 5, wherein the modulation rate of a transmission carrier is adapted according to the detected transponder type.

7. The method of claim 5, wherein the gain of a transmit amplifier (14) is adapted according to the detected transponder type.

8. A near-field read and/or write terminal (1) capable of implementing the method of any of the foregoing claims.
